# EUROPÄISCHE PATENTANMELDUNG

(11) **EP 2 050 886 A2**
(43) Veröffentlichungstag der Anmeldung: **22.04.2009**
(21) Anmeldenummer: 08017813.0
(22) Anmeldetag: 10.10.2008
(51) Int. Cl.: E04C 2/04, E04C 2/16, B28B 19/00, B41M 3/00

(54) **Bedruckbare Bauplatte, Verfahren zum Herstellen sowie Verfahren und Vorrichtung zum Bedrucken einer Bauplatte**

(30) Priorität: 17.10.2007 DE 102007049784
(71) Anmelder: Bauer, Jörg R., 88250 Weingarten (DE)
(72) Erfinder: Bauer, Jörg R., 88250 Weingarten (DE)
(74) Vertreter: Kramer - Barske - Schmidtchen

(57) **Zusammenfassung**

Bei einer Bauplatte mit einem Grundkörper mit poröser Oberfläche und einer auf die poröse Oberfläche und Zwischenanordnung eines aushärtbaren Bindemittels aufgebrachten Papierbahn ist auf die auf den Grundkörper aufgebrachte Papierbahn ein Haftvermittler aufgebracht, der geeignet ist, durch die Papierbahn (10) hindurchgedrungenes Bindemittel zu überdecken und eine Haftung zwischen der Oberfläche der Papierbahn und einer Färbeflüssigkeit (34) zu vermitteln, die mittels eines programmierbaren Druckverfahrens, insbesondere Tintenstrahldruckverfahrens, auf die mit dem Haftvermittler versehene Oberfläche der Papierbahn aufbringbar ist.

## Beschreibung

Die Erfindung betrifft eine Bauplatte mit einem Grundkörper mit poröser Oberfläche und einer auf die poröse Oberfläche aufgebrachten Papierbahn. Die Erfindung betrifft weiter ein Verfahren zum Herstellen einer Bauplatte sowie ein Verfahren und eine Vorrichtung zum Bedrucken einer solchen Bauplatte.

Für den Innenausbau von Gebäuden werden üblicherweise Bauplatten aus Mineralfaser oder Gips eingesetzt, die auf eine Tragstruktur, beispielsweise ein Metallgerüst oder Mauerwerk, aufgebracht werden. Anschließend werden solche Bauplatten, wenn eine durch sie gebildete Wand, Decke usw. gestrichen werden soll, mit einer aushärtenden Spachtelmasse verspachtelt, die eine streichfähige Oberfläche bildet, oder, falls die Wand tapeziert werden soll, mit einem entsprechenden Kleister versehen.

Aus der US 5,707,689 ist eine Bauplatte bekannt, die durch Pressen eines in eine Form eingebrachten Zementmaterials hergestellt wird. Die Oberfläche dieser Bauplatte wird mit einem Primer versiegelt und dann mit einem Tintenstrahldruckverfahren bedruckt.

Aus der DE 20 2006 004 493 U1 ist eine dekorativ beschichtete Brandschutzplatte bekannt, die hergestellt wird, indem eine nicht brennbare Faserplatte, beispielsweise eine zementgebundene Spanplatte oder Gipsfaserplatte mit einem Primer versehen wird, um deren Poren zu schließen und die Oberfläche zu härten, und die Oberfläche anschließend, gegebenenfalls nach Glättung, direkt bedruckt wird.

Aus der DE 195 328 19 A1 ist bekannt, eine Holzwerkstoffplatte herzustellen, deren zunächst poröse Oberfläche mit wässrigem Dispersionslack grundiert wird, wobei gleichzeitig ein Haftgrund erzeugt wird. Die Oberfläche wird dann versiegelt und mit einem Oberflächenlack versehen, anschließend bedruckt und schließlich mit einem UV-härtbaren Lack versiegelt.

Aus der DE 600 34 188 T2 ist eine Gipsbauplatte bekannt, die hergestellt wird, indem zwischen zwei Kaschierpapierlagen Nassgips eingebracht wird, nach dessen Trocknung eine beidseitig kaschierte Bauplatte erhalten wird. Wenigstens eine der Kaschierpapierlagen wird vor ihrer Verwendung zur Herstellung der Bauplatte vordekoriert, indem nacheinander mehrere Schichten wasserlöslicher Pigmentlacke auf das Kaschierpapier aufgebracht werden. Aus der DE 102 52 863 A1 ist bekannt, eine Papierbahn mit einem gewünschten Dekor zu bedrucken, beispielsweise einer Holzmaserung, und die bedruckte Papierbahn anschließend mit Harz zu beschichten und auf eine Holzfaser-Trägerplatte aufzubringen.

Eine Eigenart bisher bekannter Bauplatten mit einem porösen Grundkörper und einer auf wenigstens eine Seite aufgebrachten Papierlage besteht darin, dass die Papierlage vor dem Aufbringen mit einem Muster bedruckt wird, wodurch das Muster nur mit großem Aufwand in genau vorbestimmter Weise zur Bauplatte angeordnet werden kann.

Der Erfindung liegt die Aufgabe zugrunde, dem vorgenannten Problem abzuhelfen.

Der Anspruch 1 kennzeichnet eine Bauplatte, mit der das vorgenannte Problem gelöst wird.

Die Verfahrensansprüche 2 bis 6 sind auf Verfahren zur Herstellung einer erfindungsgemäßen Bauplatte gerichtet.

Der Anspruch 7 ist auf ein vorteilhaftes Verfahren zum Bedrucken einer Bauplatte gerichtet.

Der Anspruch 8 kennzeichnet eine Vorrichtung, mit der Bauplatten mittels eines programmierbaren Druckverfahrens, insbesondere Tintenstrahldruckverfahrens, bedruckbar sind, wobei nicht nur papierkaschierte Bauplatten, sondern auch nicht kaschierte Bauplatten bedruckbar sind, indem quasi in einem Arbeitsgang die Oberfläche der Bauplatte mit einem Primer versehen wird, der die Oberfläche zum unmittelbar anschließenden Bedrucken mit Färbeflüssigkeit geeignet macht.

Die Erfindung wird im Folgenden anhand einer schematischen Zeichnung beispielsweise und mit weiteren Einzelheiten erläutert. Es zeigen:
- Fig. 1: schematisch zwei verschiedene Abläufe der Herstellung einer Bauplatte einschließlich deren Bedruckung,
- Fig. 2: Details des Aufbringens einer Papierbahn auf einen Grundkörper,
- Fig. 3: eine erste Ausführungsform des Bedruckens eines mit einer Papierbahn versehenen Grundkörpers,
- Fig. 4: eine zweite Ausführungsform des Bedruckens eines mit einer Papierbahn versehenen Grundkörpers,
- Fig. 5 bis 8: verschiedene Durchführungsformen der Bedruckung eines nicht mit einer Papierbahn versehenen Grundkörpers.

Bauplatten, wie sie im Folgendem beschrieben werden, können in unterschiedlicher Weise verwendet werden, beispielsweise als Wandelement, Deckenelement, Verkleidungselement, Bodenelement usw.

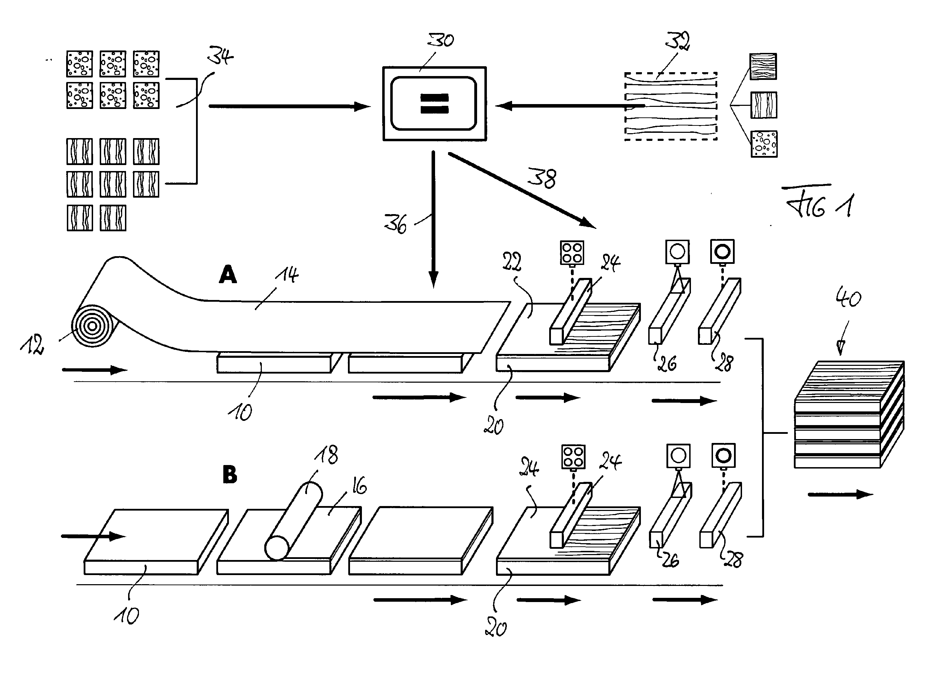

Gemäß Figur 1 wird ein zu einer Bauplatte weiter zu bearbeitender Grundkörper 10 bereitgestellt, der in an sich bekannter Weise hergestellt ist. Im Allgemeinen werden solche den Grundkörper bildende Platten in einem Floatingverfahren hergestellt, bei dem ein den späteren Grundkörper bildendes Material, beispielsweise Gips, gegebenenfalls beidseitig mit Papier bzw. Pappe kaschiert, Mineralfasermaterial, Holzfasermaterial oder Kunstfasermaterial, das vorzugsweise mit Wasser angerührt ist, auf ein flüssigkeitsdurchlässiges Transportband aufgebracht wird, auf dem das Material, gegebenenfalls während eines Durchlaufes zwischen Presswalzen, trocknet, wobei das Wasser durch die Oberfläche des späteren Grundkörpers austritt. Nach dem Trocknen entsteht ein verfestigter Grundkörper, dessen Oberfläche stark porös ist und für ein Bedrucken wegen der hohen Saugfähigkeit ungeeignet ist.

Im Folgenden werden beispielhaft zwei Möglichkeiten erläutert, wie aus einem vorzugsweise plattenförmigen Grundkörper, der eine poröse Oberfläche und eine Dicke von beispielsweise zwischen 5 mm und 40 mm hat, eine bedruckte Bauplatte hergestellt wird.

Mit A und B sind in der Figur zwei unterschiedliche Herstellwege zum Erzeugen einer Bauplatte bezeichnet.

Bei dem Herstellweg A wird von einer Vorratsrolle 12 eine Papierbahn 14 abgewickelt, die aus einem an sich bekannten Papier mit einer inkjetfähigen bzw. mit einem programmierbaren Druckverfahren bedruckbaren Oberfläche besteht. Diese Papierbahn 14 wird in nicht dargestellter, jedoch an sich bekannter Weise auf den Grundkörper 10 aufgebracht, indem beispielsweise die Unterseite der Papierbahn 14 und/oder die Oberseite des Grundkörpers 10 mit einer Kleberschicht versehen wird, die an der porösen bzw. saugfähigen Oberfläche des Grundkörpers und der Unterseite der Papierbahn anhaftet und nach Aushärten die Papierbahn fest mit dem Grundkörper verbindet. Die Fließfähigkeit des Klebermaterials, beispielsweise eines wässrigen Dispersionsklebers, ist vorteilhafterweise derart auf die Papierbahn 14 abgestimmt, dass es die Papierbahn 14 nicht vollständig durchtränkt, so dass die Oberseite der Papierbahn 14 durch die Kaschierung nicht beeinflusst wird und deren Qualität für eine Inkjetbedruckung unverändert erhalten bleibt. Vorteilhafterweise wird der Grundkörper beidseitig kaschiert, beispielsweise auf einer zu bedruckenden Oberseite mit dem Papier mit bedruckbarer Oberfläche und auf der Unterseite mit einem Gegenzugpapier, das bei Bedarf ebenfalls bedruckbar ist. Die beidseitige Kaschierung führt dazu, dass sich der entstehende Körper nicht verzieht bzw. verwölbt.

Bei dem Herstellweg B wird auf den Grundkörper 10 eine Materialschicht 16 aus fließfähigem und dann aushärtendem Material aufgebracht und mittels einer Walze 18 glatt gewalzt. Die Materialschicht 16 kann beispielsweise in einer nicht dargestellten Station aus Düsen auf die Oberfläche des Grundkörpers 10 aufgebracht und anschließend von der Walze 18 glatt gewalzt werden. Es ist auch möglich, die Materialschicht 16 unmittelbar mittels der Walze 18 aufzubringen, indem die Walze 18 in an sich bekannter Weise mit dem Material beschickt wird.

Das auf den Grundkörper 10 aufgebrachte Material kann beispielsweise eine Dispersionsgrundierfarbe auf Wasserbasis mit hellen Pigmenten sein. Die hellen Pigmente sind vorteilhaft, da eine spätere Tintenstrahlbedruckung auf hellem Untergrund ein vorteilhaftes Aussehen hat. Das Material kann in mehreren Schichten aufgebracht werden, wobei auch eine aushärtbare Spachtelmasse aufgebracht werden kann. Die Aushärtung des Materials kann lediglich durch Trocknen, gegebenenfalls durch Aufheizen unterstützt, oder mittels UV-Bestrahlung erfolgen, wobei das Material dann ein entsprechendes, unter UV-Bestrahlung aushärtendes Material ist. Insgesamt ist das Material derart, dass es auf dem Grundkörper 10 nach dem Aushärten fest anhaftet und eine Deckschicht bildet, deren Oberfläche zur Bedruckung mittels eines programmierbaren Druckverfahrens, beispielsweise eines Tintenstrahldruckverfahrens, geeignet ist. Solche Oberflächen sind hinsichtlich ihres Farbaufnahmevermögens, ihrer Oberflächengüte und ihrer Adhäsionseigenschaften auf die für das Bedrucken verwendeten Färbeflüssigkeiten in an sich bekannter Weise abgestimmt. Die Materialschicht 16 muss nicht notwendigerweise in einem Arbeitsgang aufgebracht werden, vielmehr kann sie in mehreren Arbeitsgängen in Form mehrerer aufeinander abgestimmter Schichten aufgebracht werden, wobei die oberste Schicht für die Bedruckung mittels eines programmierbaren Druckverfahrens, insbesondere Tintenstrahldruckverfahren, geeignet ist. Nach der Fertigstellung einer Bauplatte mit dem Grundkörper 10 und Deckschicht 23 oder der Papierschicht 22 aus der aufkaschierten Papierbahn 14 ausgehärteten Materialschicht 16 kann die Weiterverarbeitung zwischen den Verfahren A und B keine Unterschiede.

Die Bauplatte 20 wird im dargestellten Beispiel in einer Druckstation 24 mittels eines Tintenstrahldruckverfahrens, das heißt mittels eines Druckkopfes oder Druckbalkens in an sich bekannter Weise mit einem vorbestimmten Muster bedruckt und anschließend in einer Trockenstation 26 getrocknet und abschließend in einer Vergütungsstation 28 mit einer Vergütungsschicht versehen, die lichtdurchlässig ist, eine große Härte aufweist, auch gegen aggressive Flüssigkeiten beständig ist und UV-stabil ist. Es versteht sich, dass die Trockenstation und die Vergütungsstation nicht zwingend sind.

Die Druckstation 24 ist in ihrem Aufbau an sich bekannt und enthält beispielsweise einen oder mehrere hintereinander angeordnete Druckbalken, der bzw. die sich quer über die Bauplatte 20 erstreckt und an der Unterseite eine Mehrzahl von Farbdüsen aufweist bzw. aufweisen. Alternativ kann ein Druckbalken auch durch einen Tintenstrahlkopf mit einer oder mehreren Farbdüsen gebildet sein, der sich bezogen auf die durch Pfeile dargestellt Transportrichtung des Grundkörpers 10 quer über den Grundkörper bewegt. Vorteilhaft ist eine Ausführungsform mit ortsfestem Druckbalken und sich unter dem Druckbalken linear bewegender Bauplatte 20. Der Transport der Grundkörper 10 bzw. Bauplatten 20 kann in an sich bekannter Weite mittels eines Transportbandes, eines Rollenförders usw. erfolgen.

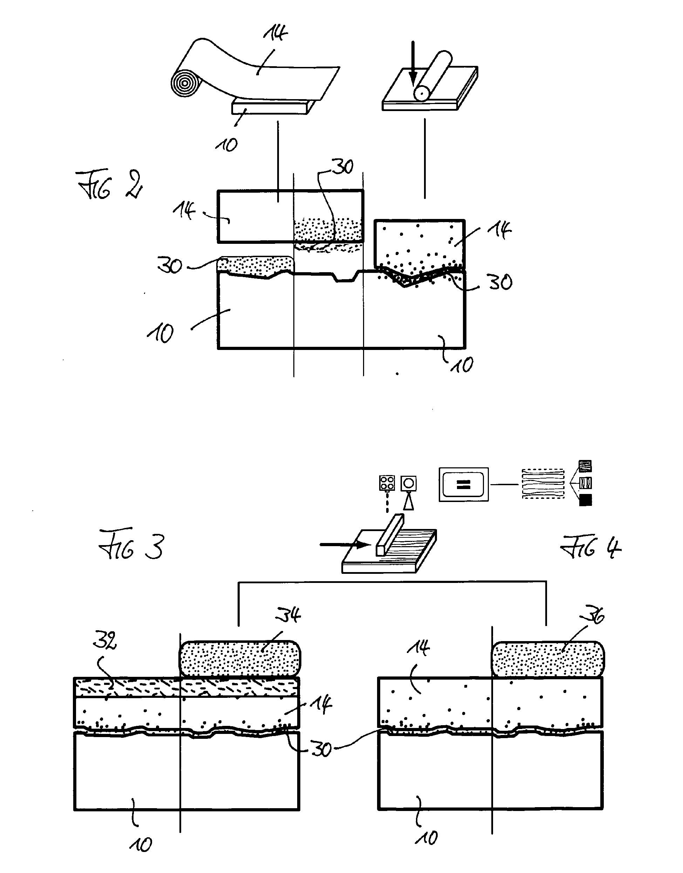

Anhand der Figuren 2 bis 4 werden im Folgenden vorteilhafte Einzelheiten des Herstellwegs A der Figur 1 erläutert; dabei deuten die senkrechten Trennstriche jeweils einzelne Verfahrensschritte an.

Gemäß Figur 2 wird auf die Oberseite des porösen, unebenen Grundkörpers 10 und/oder die Unterseite der Papierbahn 14 ein Bindemittel 30 aufgetragen. Das Bindemittel kann beispielsweise Harz, Leim oder auch ein Schmelzkleber sein. Anschließend wird die Papierbahn 14 mit dem zwischen ihr und dem Grundkörper 10 angeordneten Bindemittel auf den Grundkörper 10 aufgedrückt, was durch eine Presse oder durch Aufwalzen (Kaschieren) geschehen kann. Soweit dabei Hohlräume zwischen dem Grundkörper 10 und der Papierbahn 14 nicht unmittelbar durch Verformung ausgefüllt werden, werden sie durch das aushärtende Bindemittel 30 gefüllt. Die Papierbahn 10 weist vorteilhafter Weise durch entsprechende Vorbehandlung, beispielsweise durch Nasskreppen, eine gewisse Ziehfähigkeit auf, so dass sie sich beim Aufbringen einer Dreidimensionalität bzw. einem Relief ihrer Unterlage anpasst. Weiter ist die Papierbahn vorteilhafterweise schwer entflammbar.

Es ist nicht auszuschließen, dass das Bindemittel vor dem vollständigen Aushärten durch die Papierbahn 14 hindurchdiffundiert und an einzelnen Stellen an deren freier Oberfläche vorhanden ist, wie durch die Punkte in der Papierbahn 14 im rechten Teil der Figur 2 angedeutet. Die freiliegende Oberfläche der Papierbahn 14 wird dadurch inhomogen und für ein Bedrucken mittels eines digitalen Druckverfahrens, beispielsweise Tintendruckverfahrens, schlecht geeignet, da die oberflächlichen Bindemittelstellen die Haftung der Färbeflüssigkeit beeinflussen, wodurch sich inhomogene Färbungen ergeben.

Um Inhomogenitäten des Druckes zu vermeiden, wird gemäß Figur 3 ein Primer 32 auf die Oberfläche der Papierbahn 14 aufgebracht, der eventuell vorhandene Poren der Papierbahn verschließt und eine auch die Bindemittelreste überdeckende Schicht bildet, die einen Haftgrund für die anschließend mittels eines programmierbaren Druckverfahrens aufgebrachte Färbeflüssigkeit bzw. Färbeflüssigkeiten bildet. Der Primer 32 kann auf jedwelche bekannte Art aufgebracht werden; vorteilhaft wird der Primer 32 ebenfalls mittels eines programmierbaren Druckverfahrens aus Farbdüsen aufgebracht, die in Richtung der Relativbewegung zwischen dem Grundkörper 10 bzw. der Bauplatte 20 (Figur 1) und der Druckstation 24 vor dem oder den Düsenbalken bzw. den Farbdüsen angeordnet sind, aus denen anschließend Färbeflüssigkeit 34 auf die Primerschicht zur Ausbildung eines vorbestimmten Musters ausgebracht wird.

Die Zusammensetzung des Primers richtet sich vorteilhafterweise nach der verwendeten Papierbahn: Wenn das Papier hellfarben, infolge einer Einlagerung von z. B. Titanoxid vorzugsweise weiß durchgefärbt ist, oder zumindest eine hellfarbene, vorteilhafterweise weiße Oberschicht aufweist, kann der Primer farblos sein oder eine Grundtönung besitzen. Wenn preiswertes Papier verwendet wird, das keine unmittelbar bedruckungsgeeignete hellfarbene Oberseite aufweist, ist der Primer vorteilhafterweise hellfarben, vorzugsweise weiß, pigmentiert. Der Primer kann auch eine andere Grundeinfärbung aufweisen; wenn beispielsweise ein Holzdekor aufgedruckt werden soll, ist eine Grundeinfärbung des Primers vorteilhaft, die der hellsten Tönung des auszudruckenden Holzdekors entspricht.

In jedem Fall bildet der Primer einen Verschluss der Papieroberfläche und einen Haftvermittler für die anschließend aufgebrachte(n) Färbeflüssigkeit(en). Als Primer bzw. Haftvermittler können an sich bekannte Primer auf Polyurethan Basis, Polyester Basis oder auch Epoxidharz Basis eingesetzt werden. Bei zwei Komponentensystemen werden die beiden Komponenten beispielsweise unmittelbar nacheinander mittels eines programmierbaren Druckverfahrens aus Farbdüsen aufgebracht oder gleichzeitig aus verschiedenen Farbdüsen auf die selben Zielpunkte der Oberfläche aufgebracht, wodurch eine besonders intensive Vermischung der beiden Komponenten und dadurch gute Qualität der Primeroberfläche erzielt wird.

Figur 4 verdeutlicht ein Durchführungsform des erfindungsgemäßen Verfahrens, bei dem der Primer und die Färbflüssigkeit nicht in zwei aufeinanderfolgenden Arbeitsschritten aufgebracht werden, sondern eine Flüssigkeit 36 verwendet wird, die Primereigenschaften, d.h. haftvermittelte Eigenschaften, und Färbeeigenschaften vereint. Vorteilhafterweises haben alle verschiedenfarbigen Färbeflüssigkeiten, mit denen das Muster aufgebracht wird, diese Eigenschaften. Wenn eine Färbeflüssigkeit über die gesamte Fläche aufgebracht wird, genügt es jedoch, wenn diese Färbeflüssigkeit zusätzliche Primereigenschaft hat. Solche Färbeflüssigkeiten haben beispielsweise die gleiche oder ähnliche Zusammensetzung wie ein Primer bzw. Haftvermittler, enthalten jedoch zusätzlich Pigmente, wie sie beispielsweise in zur Bedruckung nach dem Inkjetdruckverfahren geeigneten Tinten enthalten sind. Die Färbeflüssigkeiten können ebenso wie der Primer lösungsmittelbasierend sein, wobei das Lösungsmittel bei der Trocknung verdampft, können unter normalen Umgebungsbedingungen aushärtende Systeme sein oder auch unter UV-Belichtung sehr rasch härtende Systeme sein. Insbesondere, wenn Inkjetfärbeflüssigkeiten auf zwei komponentige Primerunterlagen aufgebracht werden, sind unter UV-Bestrahlung härtende Färbeflüssigkeiten von Vorteil.

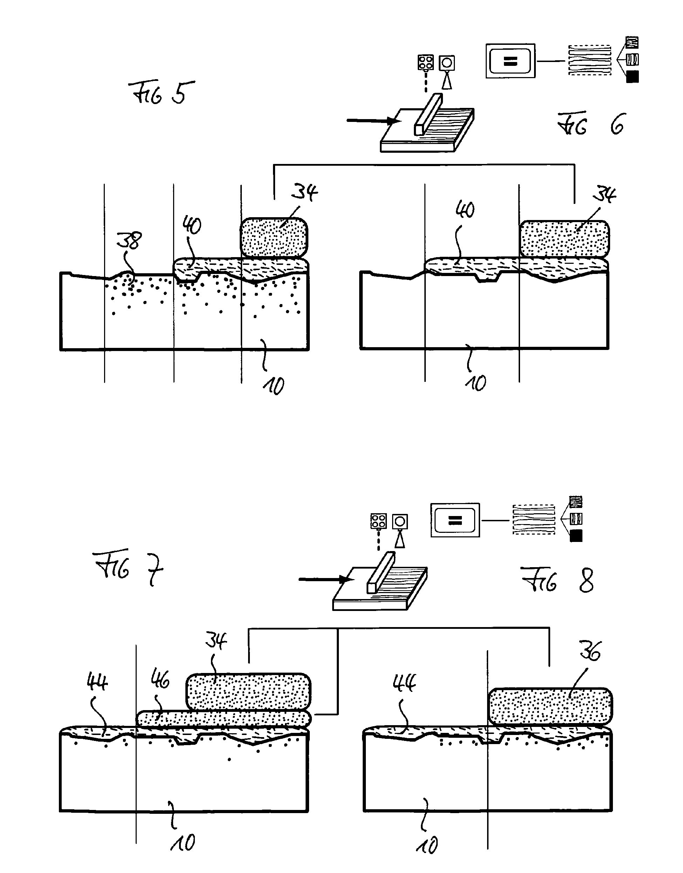

Anhand der Figuren 5 bis 8 werden Einzelheiten des Herstellwegs B der Figur 1 erläutert:

Gemäß Figur 5 wird auf einem Grundkörper 10 mit poröser und gegebenenfalls verdichteter Oberfläche eine dünnflüssige Erstgrundierung 38 aufgebracht, der zur Anpassung an eine spätere Deckfarbe Farbpigmente beigemengt sein können. Die Erstgrundierung dient zur Verfüllung feiner Kapillaren und Porungen der oberen Schichten des Grundkörpers 10. Der oberen Schichten des Grundkörpers 10 streichen und kann beispielsweise eine Grundierung auf Öl-, Wasser- oder Kunstharzbasis sein, wobei wiederum unter UV-Bestrahlung härtende Systeme vorteilhaft eingesetzt werden.

Größere Poren bzw. Unebenheiten werden durch einen Füller 40 mit Primerfunktion, d.h. Haftvermittlungsfunktion ausgeglichen. Ein solcher Füller ist beispielsweise wie ein Primer zusammengesetzt, hat jedoch einen gewissen Füllstoffgehalt. In einem anschließenden Arbeitsschritt wird auf die im Wesentlichen glatte Oberseite des Füllers 40 Färbeflüssigkeit 34 entsprechend einem programmierbaren Druckverfahren, insbesondere Tintenstrahldruckverfahren, aufgetragen.

Figur 6 stellt einen Fall dar, bei dem der Grundkörper 10, beispielsweise eine Mineralfaserplatte oder eine Gipskartonplatte mit einer Papieroberschicht, eine Oberseite mit kleiner Porung und kleinen Unebenheiten sowie einer starken Flüssigkeitsaufnahme aufweist. In diesem Fall wird eine vorteilhafterweise farbige Deckschicht mit Primerfunktion als Füller 40 direkt ohne Grundierung aufgetragen. Es entsteht eine glatte, vorteilhafterweise farbige homogene Oberschicht mit auf die später aufzubringenden Färbeflüssigkeiten 34 abgestimmten Haftungseigenschaften.

Figur 7 zeigt ein Beispiel, in dem der Grundkörper 10 mit poröser Oberfläche aus weitgehend beliebigem Material aufgebaut sein kann. Die Oberfläche des Grundkörpers 10 ist mit einem farblosen oder pigmentierten Füller 44 versehen, der Porungen und Unebenheiten ausgleicht und eine ebene Oberfläche bildet.

Auf den Füller 44, der beispielsweise ein unter UV-Bestrahlung rasch abbindender Füller ist, wird Primer 46 mit haftungsvermittelden Eigenschaften aufgebracht, dessen Oberseite wiederum mit Färbeflüssigkeit bzw. Färbeflüssigkeiten 34 bedruckt wird. In vielen Fällen ist es vorteilhaft, dass das letztendliche Muster auf eine homogene, vorzugsweise hellfarbene Ober-

fläche bedruckt wird. Wenn der Füller 44 durchscheinend ist, ist der Primer 46 vorteilhafter Weise derart eingefärbt, dass er deckend ist und umgekehrt kann der Primer 46 durchscheinend bzw. farblos sein, wenn der Füller 44 undurchsichtig und beispielsweise hell eingefärbt ist.

Ähnlich wie anhand der Figur 3a erläutert, kann der Primer 32 unmittelbar vor dem Aufbringen der Färbeflüssigkeit 34 aus einer oder mehreren Farbdüsen aufgebracht werden, die digital angesteuert werden, wobei der Auftrag des Primers 32 unmittelbar vor dem Auftrag der Färbeflüssigkeit(en) 34 erfolgt. Bezüglich der maschinellen Ausrüstung erfolgen der Primerauftrag und die Musterbedruckung somit aus einer einzigen digital gesteuerten Einrichtung.

Figur 8 verdeutlicht ähnlich wie Figur 4 eine Ausführungsform, bei der auf die Füllerschicht 44 eine Flüssigkeit oder Flüssigkeiten 42 mittels eines digitalen steuerbaren Druckverfahrens, beispielsweise Tintenstrahldruckverfahrens, aufgebracht wird bzw. werden, die gleichzeitig Färbe und Primer, d.h. Haftvermittlungsfunktion aufweist.

Die gesamte beschriebene Anordnung kann in eine Gesamtanlage zur Herstellung einer kundenspezifisch kommissionierten Mehrzahl von mit vorbestimmten Mustern bedruckten Bauplatten integriert sein:

In einer Datenverarbeitungseinrichtung 50 der Anlage können einerseits Mustervorlagen 52 eingegeben werden, beispielsweise aus Urmustern, wie Holzoberflächen, Steinoberflächen usw. eingescannt werden oder synthetisch erzeugt werden. Weiter können in die Datenverarbeitungseinrichtung 50 kundenspezifische Daten 54 eingegeben werden, wie Anzahl und Größe benötigter Bauplatten sowie die aus den Mustervorlagen 52 ausgewählten Muster, mit denen diese Bauplatten bedruckt werden sollen, wobei es auch möglich ist, dass mehrere Bauplatten derart bedruckt werden, dass sich nach deren Zusammensetzung ein vorbestimmtes, zusammenhängendes Muster ergibt, beispielsweise eine Holzoberfläche, die aussieht, als sei die Mehrzahl der sie zusammensetzenden Bauplatten aus einem Stück Echtholz gefertigt.

Die Datenverarbeitungseinrichtung 50 steuert den Zuschnitt der Grundkörper 10 entsprechend dem Bestelleingang, dargestellt durch den Pfeil 56, und die Bedruckung der zugeschnittenen Bauplatten mit den vorbestimmten Mustern, dargestellt durch den Pfeil 58.

Die Zuschnittsteuerung kann derart erfolgen, dass bereits fertig zugeschnittene Bauplatten bedruckt werden, oder aber die bedruckten Bauplatten zugeschnitten werden, bevor sie bedruckt werden. Die erstgenannte Möglichkeit hat den Vorteil, dass bei Bedruckung der bereits fertig zugeschnittenen Bauplatten die Bedruckung mit einer leichten Überdruckung der Ränder der Bauplatten erfolgen kann, so dass der an den Seitenflächen der Bauplatten sichtbare Übergang zwischen Grundkörper und bedruckbarer Schicht verdeckt wird.

Die zugeschnittenen und bedruckten Bauplatten werden in einer Kommissionierstation 40 zusammengeführt und können von dort entsprechend der kundenspezifischen Bestellung ausgeliefert werden.

Die erfindungsgemäßen fertig bedruckten Bauplatten können beispielsweise einzeln als dekorative Verkleidungsplatten eingesetzt werden oder in vorbestimmter Weise in einer Mehrzahl zu einer kompletten Wandverkleidung zusammengesetzt werden, wobei die Nahtstellen zwischen den Bauplatten allenfalls bei näherer Betrachtung erkennbar sind. Aus den erfindungsgemäßen Bauplatten können Muster zusammengesetzt werden, wobei die Konturen der Bauplatten selbst zum Ornament des Musters beitragen können. Die angegebenen Beispiele für Zusammensetzungen oder sonstige Eigenschaften sind nicht abschließend, sondern können durch weitere ergänzt werden.

### Bezugszeichenliste

- 10: Grundkörper
- 12: Vorratsrolle
- 14: Papierbahn
- 16: Materialschicht
- 18: Walze
- 20: Bauplatte
- 22: Papierschicht
- 23: Deckschicht
- 24: Druckstation
- 26: Trockenstation
- 28: Vergütungsstation
- 30: Bindemittel
- 32: Primer
- 34: Färbeflüssigkeit
- 36: Primer/Färbeflüssigkeit
- 38: Erstgrundierung
- 40: Füller mit Primerfunktion
- 44: Füller
- 50: Datenverarbeitungseinrichtung
- 52: Mustervorlagen
- 54: kundenspezifische Daten
- 56: Zuschnittsteuerung
- 58: Drucksteuerung
- 60: Kommissionierstation

## Patentansprüche

1. Bauplatte mit einem Grundkörper (10) mit poröser Oberfläche und einer auf die poröse Oberfläche unter Zwischenanordnung eines aushärtbaren Bindemittels (30) aufgebrachten Papierbahn (14),
**dadurch gekennzeichnet, dass**
auf die auf den Grundkörper aufgebrachte Papierbahn (14) ein Primer (32) aufgebracht wird, der geeignet ist, durch die Papierbahn (14) hindurchgedrungenes Bindemittel zu überdecken und eine Haftung zwischen der Oberfläche der Papierbahn und einer Färbeflüssigkeit (34) zu vermitteln, die mittels eines programmierbaren Druckverfahrens, insbesondere Tintenstrahldruckverfahrens, auf die mit dem Haftvermittler versehene Oberfläche der Papierbahn aufbringbar ist.

2. Verfahren zum Herstellen einer Bauplatte, enthaltend folgende Arbeitsschritte:
- Bereitstellen eines plattenförmigen Grundkörpers (10) mit einer porösen Oberfläche,
- Aufbringen eines fließfähigen Bindemittels (30) auf die poröse Oberfläche des Grundkörpers und/oder die dem Grundkörper zugewandte Seite einer Papierbahn (14),
- Aufbringen der Papierbahn auf den Grundkörper mit dazwischen angeordnetem fließfähigem Bindemittel (30),
- Pressen oder Walzen der Papierbahn auf den Grundkörper und
- Aufbringen eines Primers (32) auf die Papierbahn, welcher Primer bis an die freie Oberfläche der Papierbahn durchgedrungenes Bindemittel überdeckt und derart auf eine auf die Bauplatte mittels des programmierbaren Druckverfahrens aufzubringende Färbeflüssigkeit abgestimmt ist, dass er einen Haftvermittler für die Färbeflüssigkeit bildet.

3. Verfahren nach Anspruch 2, wobei die auf den Grundkörper (10) aufzubringende Papierbahn (14) an ihrer nach Aufbringen auf den Grundkörper freiliegenden Oberfläche hellfarben ist und der auf die hellfarbene Oberfläche der Papierbahn aufgebrachte Primer (32) Poren der Oberfläche der Papierbahn verschießt.

4. Verfahren nach Anspruch 2, wobei der auf die nach dem Aufbringen auf den Grundkörper (10) frei liegende Oberfläche der Papierbahn (14) aufgebrachte Primer (32) hellfarben und deckend ist und Poren der Oberfläche der Papierbahn verschießt.

5. Verfahren zum Herstellen einer Bauplatte, enthaltend folgende Arbeitsschritte:
- Bereitstellen eines plattenförmigen Grundkörpers (10) mit einer porösen Oberfläche,
- Aufbringen eines fließfähigen Bindemittels (30) auf die poröse Oberfläche des Grundkörpers und/oder die dem Grundkörper zugewandte Seite einer Papierbahn (14),
- Aufbringen der Papierbahn auf den Grundkörper mit dazwischen angeordnetem fließfähigen Bindemittel,
- Pressen oder Walzen der Papierbahn auf den Grundkörper und
- Bedrucken der Papierbahn mittels eines programmierbaren Druckverfahrens mit wenigstens einer Färbeflüssigkeit (36), die zusätzlich zu ihren Färbeeigenschaften eine Haftung vermittelnde Eigenschaften aufweist, so dass bis an die Oberfläche der Papierbahn durchgedrungenes Bindemittel neutralisiert wird.

6. Verfahren nach einem der Ansprüche 2 bis 5, wobei die Papierbahn (14) derart ziehfähig ist, dass sie sich beim Aufbringen auf den Grundkörper (10) einer dreidimensionalen Oberflächenstruktur der Unterlage, auf die sie aufgebracht wird, anpasst.

7. Verfahren zum Bedrucken einer Bauplatte mittels eines programmierbaren Druckverfahrens, insbesondere Tintenstrahldruckverfahrens, wobei wenigstens eine Färbeflüssigkeit (36) verwendet wird, die haftungsvermittelnde und färbende Eigenschaften aufweist.

8. Vorrichtung zum Bedrucken einer Bauplatte mit poröser Oberfläche mittels eines programmierbaren Druckverfahrens, insbesondere Tintenstrahldruckverfahrens, enthaltend eine Fördereinrichtung für eine Bewegung der Bauplatte (20) relativ zu elektronisch ansteuerbaren Farbdüsen, wobei in Bewegungsrichtung der Bauplatte relativ zu den Farbdüsen wenigstens zwei Farbdüsen hintereinander angeordnet sind, wobei eine vordere Farbdüse zum Aufbringen eines Primers auf die poröse Oberfläche und eine hintere Farbdüse zum Aufbringen von Färbeflüssigkeit auf die mit Primer versehene Oberfläche vorgesehen ist.
